Europäisches Patentamt

European Patent Office

Office européen des brevets

(11) Publication number: 0 350 917 A2

# EUROPEAN PATENT APPLICATION

(21) Application number: 89112846.4

(22) Date of filing: 13.07.89

(51) Int. Cl.⁴: G06F 12/14

(30) Priority: 13.07.88 JP 174411/88

(43) Date of publication of application:
17.01.90 Bulletin 90/03

(84) Designated Contracting States:
DE FR GB

(71) Applicant: Kabushiki Kaisha Toshiba
72, Horikawa-cho Saiwai-ku
Kawasaki-shi(JP)

(72) Inventor: Nishigaki, Nobutaka Intellectual
Property Division
K.K. Toshiba 1-1 Shibaura 1-chome
Minato-ku Tokyo 105(JP)

(74) Representative: Lehn, Werner, Dipl.-Ing. et al
Hoffmann, Eitle & Partner Patentanwälte
Arabellastrasse 4
D-8000 München 81(DE)

(54) Personal computer system capable of preventing contention in memory address space.

(57) A personal computer system includes a memory (16) for storing a program, a first address area of a memory address space being assigned to the program, and a relocation control section (2, 4, 14) for inhibiting the memory (16) from being read-accessed, for reading out data from a first address of the first address area, for determining in accordance with the data whether or not relocation of the program in the memory address space is necessary, and for assigning a second address area to the program when it is determined that the relocation is necessary.

F I G. 2

## Personal computer system capable of preventing contention in memory address space

The present invention relates to a personal computer system capable of relocating a program in an address space and, more particularly, to a personal computer capable of relocating a system program when an option board is mounted.

In recent years, as semiconductor techniques have progressed, very inexpensive microprocessors, memory LSIs and peripheral circuit control LSIs have become commercially available. By arbitrarily combining these elements, comparatively high-performance personal computer systems have been constructed and put into practical use. Accordingly, a large number of software parts have also become commercially available. Specifications of personal computers, however, have not been standardized yet. Therefore, software which can be used in a certain computer system sometimes cannot be used in another. For this reason, a strong demand has arisen from users for a compatible personal computer system.

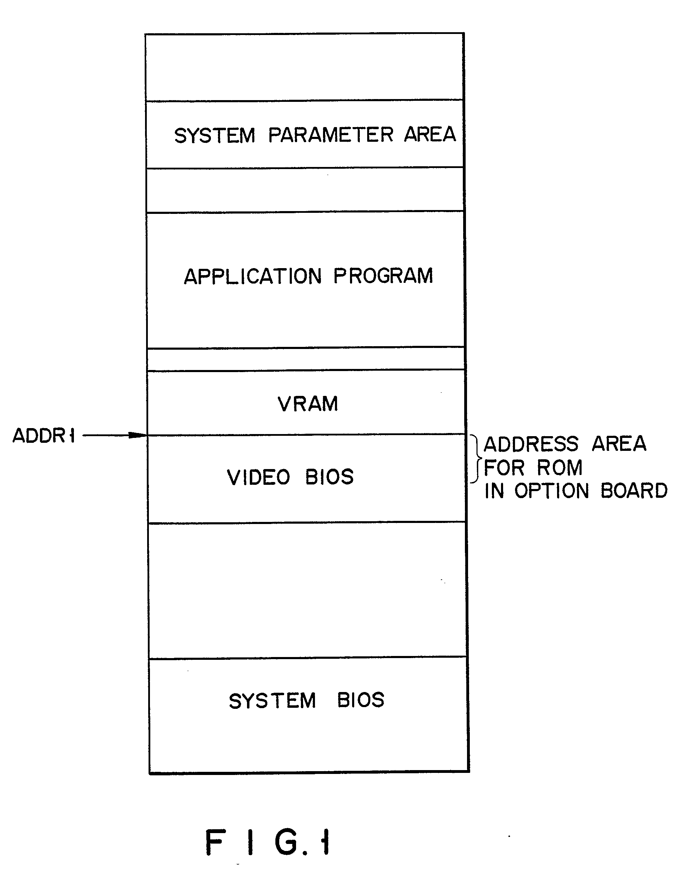

In addition, a strong demand has arisen from users for a highly functional system. For this reason, a personal computer system is subjected to improvements within a very short time period. Therefore, a computer system is so designed as to enable expansion of its functions. Such function expansion can be achieved by mounting an option board, and a part of an address space is used for this purpose. For example, when a function is to be expanded by a ROM of an option board in an address space assigned as shown in Fig. 1, an address space to be assigned to the ROM may contend with an address space for a video basic input/output system (BIOS). In this case, therefore, since the function of the computer system cannot be expanded, software using a function-expanded computer system cannot be employed.

Although an address space to be used for function expansion can be normally changed by a switch or the like, it sometimes cannot be changed. Therefore, it whould be desirable to provide a computer system capable of achieving function expansion while maintaining compatibility.

The present invention has been made in consideration of the above situation and has as its object to provide a personal computer system having a wide range of compatibility which is capable of preventing contention in an address space when a function is expanded.

In order to achieve the object, the personal computer system comprises memory for storing a program, a first address area of a memory address space being assigned to the program, and a relocation control section for inhibiting the memory from being read-accessed, reading out data from a first address of the first address area, determining in accordance with the data whether or not relocation of the program in the memory address space is necessary, and assigning a second address area to the program when it is determined that the relocation is necessary.

In order to achieve another object, the method of preventing an address space from contention comprises inhibiting a program from being read-out from a first memory, a first address area being assigned to the first memory; determining whether a part of a first address area assigned to the program is used by a device; and assigning a second address area to the program when it is determined that the part of the first address area is used by the device.

As described above, according to the personal computer system of the present invention, even if an address space assigned to an option board contends with an address space for a video BIOS for instance, the address space for the video BIOS can be easily changed. Therefore, a personal computer system capable of using both the functions while maintaining a wide range of compatibility can be provided.

This invention can be more fully understood from the following detailed description when taken in conjunction with the accompanying drawings, in which:

Fig. 1 is a view showing conventional memory address spaces;

Fig. 2 is a block diagram showing an arrangement of a personal computer system according to a first embodiment of the present invention;

Fig. 3 is a block diagram showing an arrangement of a VBO controller shown in Fig. 2;

Fig. 4 is a flow chart for explaining an operation of the first embodiment;

Fig. 5 is a block diagram showing an arrangement of a personal computer system according to a second embodiment of the present invention;

Fig. 6 is a block diagram showing an arrangement of a VBA controller shown in Fig. 5;

Fig. 7 is a flow chart for explaining an operation of the second embodiment; and

Fig. 8 is a view for explaining an operation of the present invention.

A personal computer system according to embodiments of the present invention will be described in detail below with reference to the accompanying drawings.

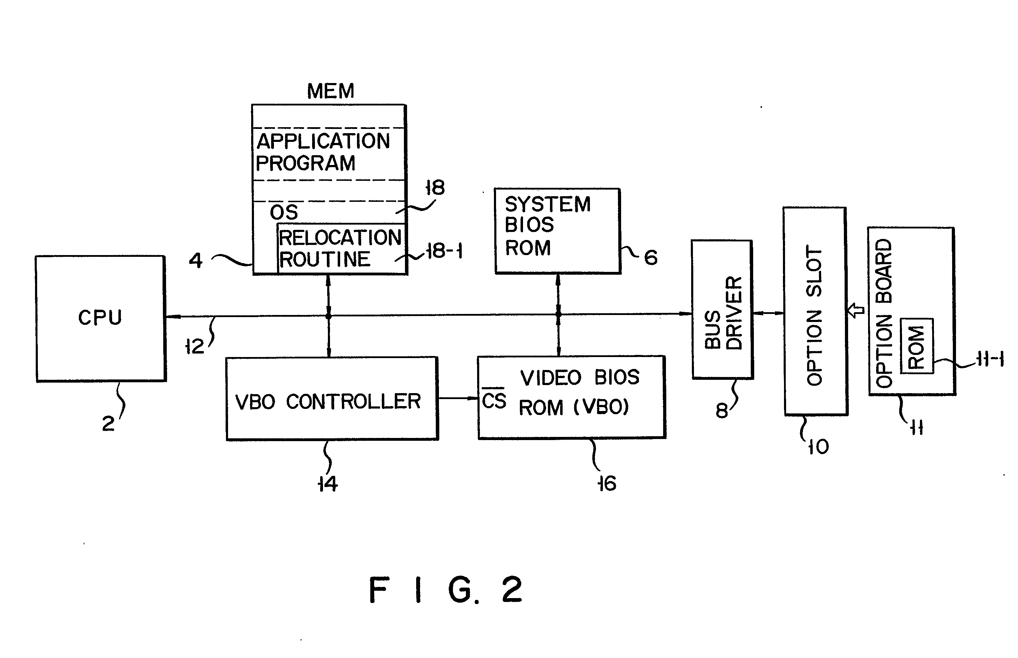

Referring to Fig. 2, an arrangement of a computer system according to a first embodiment of the present invention will be described. A 32-bit CPU 2, a memory (MEM) 4, and ROMs 6 and 16 are connected to a system bus 12. The system bus 12 includes address, data and control buses. The memory 4 stores an operating system (OS) 18 and an application program. The OS includes a relocation routine 18-1. When a power source of the system is switched on, the CPU 2 executes the operating system and then the application program. The ROM 6 stores a system BIOS. The video BIOS ROM (VBO) 16 which stores a video BIOS is a 16-bit-boundary ROM. When a chip select signal $\overline{CS}$ of logic "0" is input, the ROM 16 outputs data stored at an address input from the address bus onto the data bus. An option slot 10 for inserting an option board 11 is connected to the system bus via a bus driver 8. A ROM 11-1 is mounted on the option board 11. An address area starting from an address ADDR1 in a memory address space must be assigned to the ROM 11-1. As shown in Fig. 1, this address area is currently assigned to the video BIOS.

A VBO controller 14 supplies the signal $\overline{CS}$ to the ROM 16 in accordance with read inhibition data, read permission data and a VBO start address output from the CPU 2 via the data bus, an address output from the CPU 2 via the address bus, and a memory read signal MR output from the CPU 2 via the control bus.

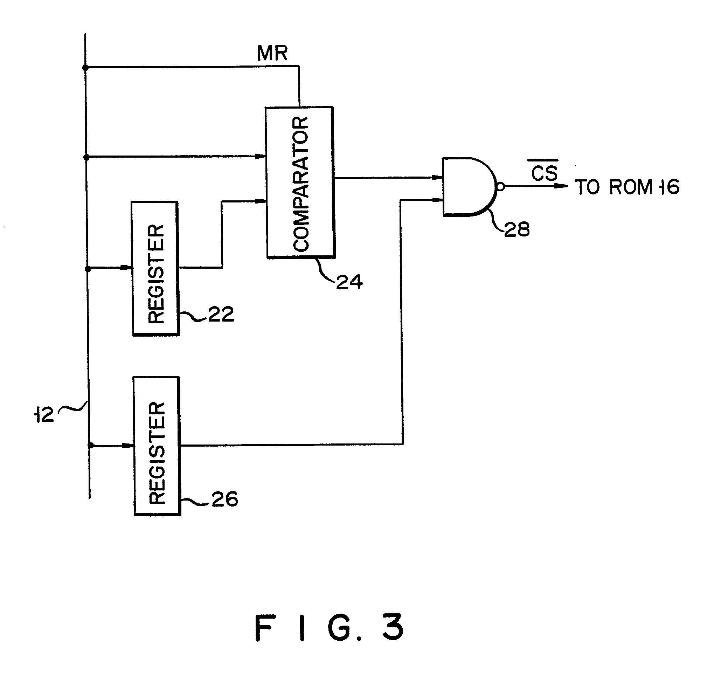

Fig. 3 shows an arrangement of the controller 14 in detail. Referring to Fig. 3, a register 22 is connected to the data bus of the system bus 12 and latches the VBO start address therefrom. A comparator 24 is connected to the system bus 12 and the register 22. In response to the signal MR from the control bus, the comparator 24 receives an address from the address bus and compares the received address with the address latched by the register 22. When the two addresses coincide with each other, the comparator 24 outputs a coincidence signal of logic "1" to a NAND gate 28. A register 26 receives read inhibition data of logic "0" or read permission data of logic "1" via the control bus and outputs the received data to the NAND gate 28. In accordance with the coincidence signal and the data from the register 26, the NAND gate 28 generates and supplies the signal $\overline{CS}$ to a chip select terminal of the ROM 16.

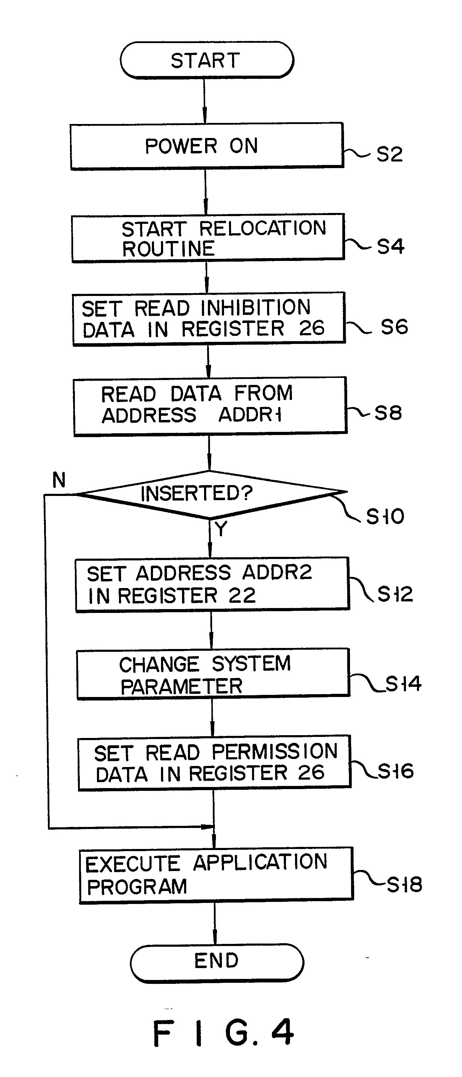

An operation of the first embodiment will be described below with reference to Fig. 4.

When a power source of the system is turned on in step S2, the operating system 18 is activated to start the relocation routine 18-1 in step S4. In the routine 18-1, the CPU 2 checks whether an address area initially assigned to the video BIOS must be changed. If a change is requested, the CPU 2 changes the address area assigned to the video BIOS. In step S6, the CPU 2 outputs read inhibition data of logic "0" to the register 26. The inhibition data is latched by the register 26 and supplied to the NAND gate 28. Since the inhibition data is at logic "0", the output signal $\overline{CS}$ from the NAND gate 28 is necessarily at logic "1". Therefore, the ROM 16 is inhibited from being read-accessed. In step S8, the CPU 2 reads out data from the address ADDR1. Since the ROM 16 is inhibited from being read-accessed, random data is read out if the option board 11 is not inserted in the option slot 10. Data is read out from the start address of the ROM 11-1 mounted on the board 11 if the option board 11 is inserted in the slot 10. Predetermined data is generally stored in this address. Therefore, the CPU 2 checks in accordance with the data read out from the address ADDR1 whether the board 11 is inserted in the slot 10. If the readout data differs from the predetermined data, the CPU 2 determines in step S10 (determination N) that the option board 11 is not inserted in the slot 10 and executes the application program in step S18. If the readout data coincides with the predetermined data, the CPU 2 determines in step S10 (determination Y) that the option board 11 is inserted in the slot 10 and executes step S12.

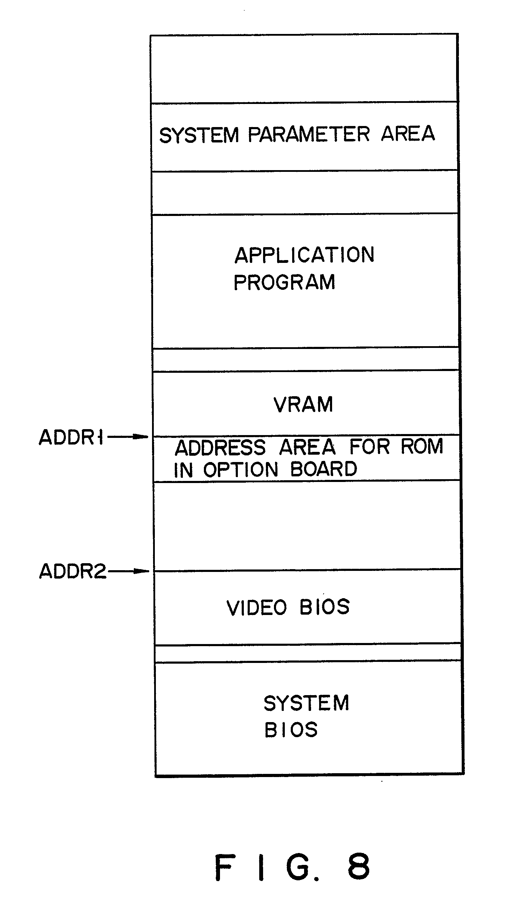

In step S12, a relocation start address ADDR2 is supplied to and latched by the register 22 from the CPU 2. As a result, the video BIOS is relocated as shown in Fig. 8. In step S14, a system parameter in a system parameter area is changed. Therefore, when the system parameter is referred to for activating the video BIOS, the address ADDR2 can be correctly designated. Thereafter, in step S16, read permission data of logic "1" is supplied to and latched by the register 26. Therefore, the coincidence signal output from the comparator 24 can be supplied as the signal $\overline{CS}$ from the NAND gate 28 to the ROM 16. Thereafter, the application program is executed in step S18.

For the following discussion, it is assumed that the application program is executed in step S18 and a request for data display occurs. At this time, the CPU 2 refers to the system parameter and supplies an access address to the comparator 24. The comparator 24 compares an upper portion of the access address from the address bus with an upper portion of the start address held in the register 22. When the upper portions of the two addresses coincide with each other, the comparator 24 outputs a coincidence signal to the NAND gate 28. Since the NAND gate 28 also receives the read permission data of logic "1" from the register 26, it supplies the signal $\overline{CS}$ of logic "0" to the ROM 16. Since the access address is supplied to the ROM 16, data is read out from the access address of the ROM 16 and output to the CPU 2. In the above operation, if the application program is not function-expanded, the system parameter is not changed. Therefore, the address ADDR1 is referred in order to access the video BIOS. If the application program is for a function-expanded computer system, the address ADDR2 is referred in order to access the video BIOS because the system parameter is changed.

When the address ADDR1 is output from the CPU 2 in order to access the ROM 11-1 on the option board 11, the coincidence signal from the comparator 24 is set at logic "0" because the upper portions of the address ADDR1 and the start address held in the register 22 do not coincide with each other. Therefore, since the output signal $\overline{CS}$ from the NAND gate 28 is set at logic "1", the ROM 16 is inhibited from being accessed. Therefore, address contention with the ROM 11-1 on the option board 11 does not occur.

A second embodiment of a personal computer system of the present invention will be described in detail below.

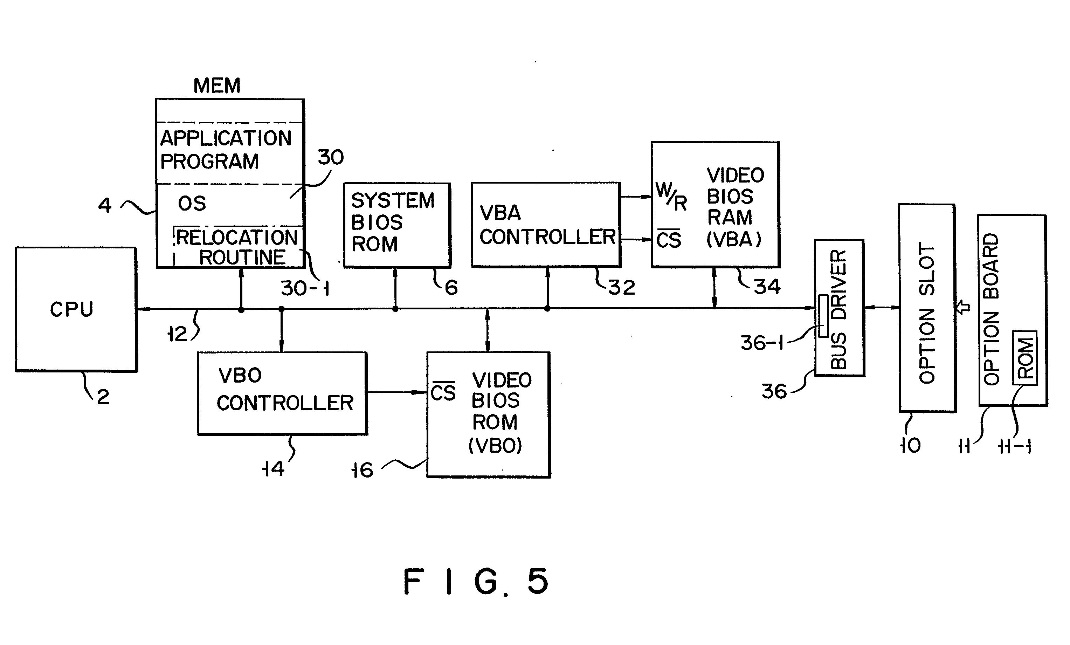

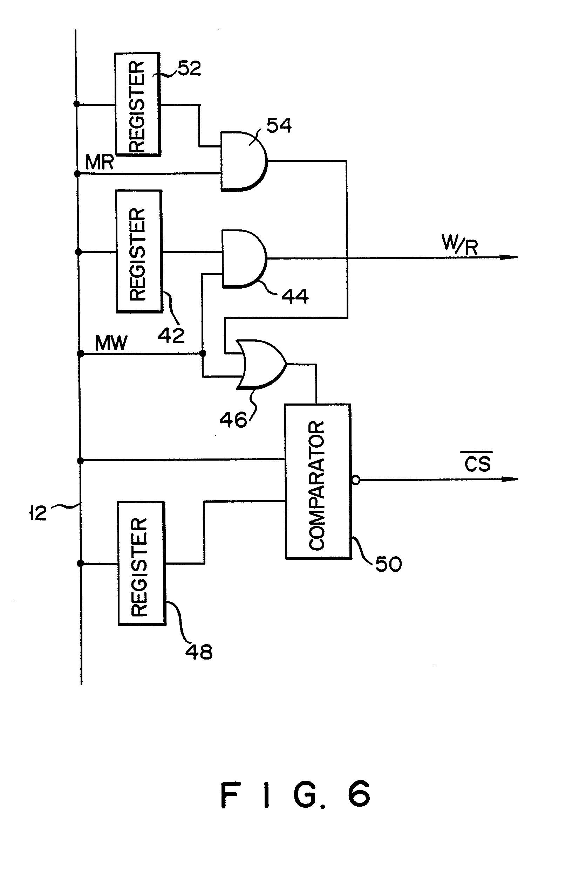

In an arrangement of the second embodiment illustrated in Fig. 5, the same reference numerals as in the first embodiment denote the same parts, and a detailed description thereof will be omitted. A memory 30 connected to a system bus 12, stores an application program and an operating system including a relocation routine. A bus driver 36, having a register 36-1, transfers data between an option board 11 inserted in an option slot 10 and the system bus 12 when transfer permission data from CPU 2 is held in register 36-1. When transfer inhibition data is received from CPU 2, the data transfer is inhibited. A 32-bit-boundary RAM (VBA) 34 is provided for storing a video BIOS. The RAM 34 is access-controlled by signals $\overline{CS}$ and W/R. A VBA controller 32 sets the RAM 34 in a write enable state in accordance with write permission data of logic "1" from the CPU 2, and protects the RAM 34 against a write operation in accordance with write inhibition data of logic "0" from the CPU 2. Fig. 6 shows an arrangement of the controller in detail.

Referring to Fig. 6, a register 42 receives and latches the write inhibition or permission data from the CPU 2 via a data bus. A memory write signal MW from a control bus is supplied to one input terminal of an AND gate 44, and data held in the register 42 is supplied to the other input terminal of the AND gate 44. An output signal W/R from the AND gate 44 is supplied to a write/read terminal of the RAM 34. The signal MW is also supplied to an OR gate 46. A register 52 receives and latches the read inhibition or permission data from the CPU 2 via the data bus. A memory read signal MR from the control bus is supplied to one input terminal of an AND gate 54, and data held in the register 52 is supplied to its other input terminal. An output signal from the AND gate 54 is supplied to one terminal of the OR gate 46 and the signal MW to the other terminal. An output from the OR gate 46 is supplied as a control signal to a comparator 50. A start address of an address area to which the video BIOS is to be copied is already supplied to a register 48 from the CPU 2 via the data bus. In response to the control signal from the OR gate 46, the comparator 50 compares an access address supplied from an address bus with the start address held in the register 48. If the two addresses coincide with each other, the comparator 50 generates and outputs a chip select signal $\overline{CS}$ of logic "0" to the RAM 34.

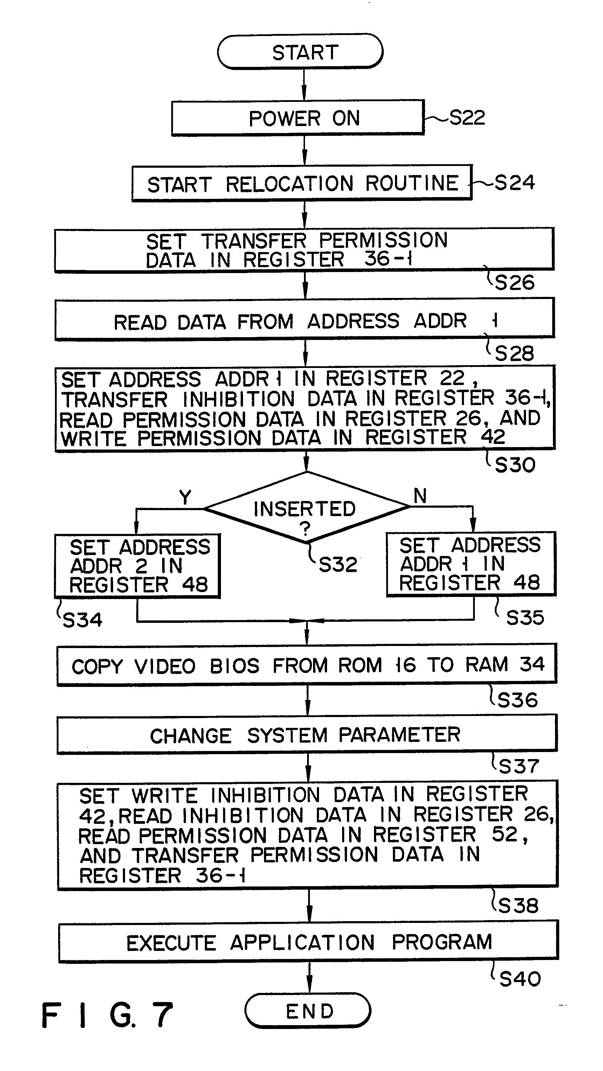

An operation of the second embodiment will be described in detail below with reference to Fig. 7.

An operation from steps S22 to S28 is similar to that of the first embodiment, except that transfer permission data is set in the register 36-1 of the bus driver 36 in step S26.

In step S30, the CPU 2 sets an address ADDR1 in the register 22 of controller 14, the transfer inhibition data in the register 36-1, the read permission data in the register 26 of a controller 14, and the write permission data in the register 42 of the controller 32.

As a result, the ROM 16 is set in a read enable state. In step S32, the CPU 2 determines in accordance with data read out in step S28 whether or not address space contention occurs, i.e., the CPU determines if an option board 11 is inserted in an option slot 10. If the determination is "no" (N) in step S32, i.e., if the CPU 2 determines that no address contention occurs, address ADDR1 is set in register 48 in step S35. If the determination is "yes" (Y) in step S32, the relocation start address ADDR2 is set in the register 48 of the controller 32 in step S34.

In step S36, the video BIOS is copied from the ROM 16 to the RAM 34. More specifically, when the option board 11 is inserted into the option slot 10, the CPU 2 executes a read operation twice for the ROM 16 to read out two 16-bit data. At this time, upper portions of the address ADDR1 held in the register 22 and the access address supplied from the address bus coincide with each other, and the read permission data of logic "1" is held in the register 26. Therefore, the signal $\overline{CS}$ is supplied to the ROM 16. Each 16-bit data is read out in accordance with the signal $\overline{CS}$ and the access address from the address bus. Subsequently, the CPU 2 writes 32-bit data obtained by combining the two 16-bit data in the RAM 34. At this time, since the address ADDR2 held in the register 48 coincides with the access address supplied from the address bus, the signal $\overline{CS}$ is supplied to the RAM 34. In addition, since the write permission data is held in the register 42, a signal W is supplied to the RAM 34 in accordance with the signal MW. The 32-bit data is written in the RAM 34 in accordance with

the signals $\overline{CS}$ and W and the access address from the address bus. When the option board 11 is not inserted into the option slot 10, an identical address area is assigned to ROM 16 and RAM 34 and CPU 2 sets read inhibition data in the register 52. Thereafter, the above copy operation is performed. By executing the above operation for each word in the video BIOS stored in the ROM 16, the video BIOS is copied from the ROM 16 to the RAM 34.

When the copy operation is finished, in step S37, a system parameter is changed so that the address ADDR2 is set as the start address of the video BIOS when the determination Y is obtained in step S32. It is not necessary to change the system parameter when the determination N is obtained in step S32. Subsequently, in step S38, the write inhibition data is supplied to and latched by the register 42 of the controller 32 from the CPU 2. As a result, the RAM 34 is protected against the write operation. In addition, in step S38, read inhibition data is supplied to and latched by the register 26 of the controller 14. As a result, the ROM 16 is protected against the read operation. When the copy operation is completed, read permission data is set in the register 52, and transfer permission data in the register 36-1. Therefore, even if the address ADDR1 is read-accessed, only the ROM 11-1 of the option board 11 is accessed, but the ROM 16 is not accessed.

Thereafter, an application program is executed in step S40. It is next assumed that data display is requested during execution of the application program. At this time, the CPU 2 refers to the system parameter and outputs an access address onto the address bus. In addition, the signal MR is output to the control bus. When no contention occurs in an address space, the CPU 2 outputs an address in an address area including the address ADDR1. When contention occurs in the address space and the video BIOS is relocated, an address in an address area including the address ADDR2 is output. Therefore, when the video BIOS is relocated, the access address on the address bus is received by the comparator 50. The comparator 50 compares an upper portion of the access address from the address bus with an upper portion of the start address held in the register 48. When the two portions coincide with each other, the comparator 50 outputs the signal $\overline{CS}$ to the RAM 34. Since the write inhibition data is held in the register 42, the signal MW of logic "0" is supplied as the signal R to the RAM 34. The video BIOS is read out in units of 32 bits in accordance with the signals R and $\overline{CS}$ and the access address from the address bus. Therefore, display data can be processed at a higher speed than in accessing the ROM 16 in units of 16 bits. When no contention occurs in an address space, the system operates as described in the first embodiment.

Thus, it is intended that the present invention cover the modifications and the variations of this invention provided they come within the scope of the appended claims and their equivalents.

Reference signs in the claims are intended for better understanding and shall not limit the scope.

## Claims

1. A personal computer system characterized by comprising:
storage means (16) for storing a selected program, a first address area of a memory address space being assigned to the selected program; and
relocation control means (2, 4, 14; 2, 4, 32, 34) for inhibiting said storage means (16) from being read-accessed, for reading out data from a first address of the first address area, for determining in accordance with the data whether or not relocation of the program in the memory address space is necessary, and for assigning a second address area to the selected program when it is determined that the relocation is necessary.

2. A system according to claim 1, characterized in that said relocation control means (2, 4, 14; 2, 4, 32, 34) comprises:
control means (14) for inhibiting said storage means (16) from being read-accessed, in accordance with input read inhibition data, and for permitting said storage means (16) to be read-accessed in the second address area in accordance with input read permission data and an input assignment address; and
relocation means (2, 4) for executing a relocation program, said relocation means (2, 4) outputs the read inhibition data to said control means (14), reads out the data from the first address of the first address area, determines in accordance with the data whether or not relocation of the selected program in the memory address space is necessary, and outputs the assignment address and the read permission data to said control means (14) to assign the second address area to the selected program when it is determined that the relocation is necessary.

3. A system according to claim 2, characterized in that said relocation means (2, 4) further comprises:
memory means (4) for storing the relocation program; and
executing means (2) for executing the relocation program.

4. A system according to one of claims 2 and 3, characterized in that said control means (14) comprises:

comparing means (22, 24) for comparing a bit portion of an input access address with a bit portion of a read address and for generating a coincidence signal in accordance with the compared result;

register means (26) for holding as control data one of the read permission data and the read inhibition data; and

read access control means (28) for controlling said storage means (16) to be read-accessed in accordance with the coincidence signal and the control data.

5. A system according to one of claims 2 through 4, characterized in that the relocation program is included in an operating system.

6. A system according to claim 1, characterized in that said relocation control means (2, 4, 14; 2, 4, 32, 34) comprises:

first control means (14) for inhibiting said storage means (16) from being read-accessed, in accordance with input read inhibition data, and for permitting said storage means (16) to be read-accessed in the first address area in accordance with input read permission data and an input first assignment address;

buffer means (34) for storing the selected program;

second control means (32) for permitting said buffer means (34) to be write-accessed in the second address area in accordance with input write permission data and an input second assignment address; and

relocation means (2, 4) for executing a relocation program, said relocation means (2, 4) outputs the read inhibition data to said first control means (14), reads out the data from the first address of the first address area, determines in accordance with the data whether or not relocation of the program in the memory address apace is necessary, outputs the first assignment address and the read permission data to said first control means (14), outputs the second assignment address and the write permission data to said second control means (32) when it is determined that the relocation is necessary, and reads out the program from said storage means (16) to write the program into said buffer means (34).

7. A system according to claim 6, characterized in that said second control means (32) inhibits said buffer means (34) from being write-accessed, in accordance with input write inhibition data, and said relocation means (2, 4) further outputs the write inhibition data to said second control means (32) after the program is stored in said buffer means (34).

8. A system according to one of claims 6 and 7, characterized in that said relocation means (2, 4) comprises:

memory means (4) for storing the relocation program; and

executing means (2) for executing the relocation program.

9. A system according to one of claims 6 through 8, characterized in that a write operation into said buffer means (34) is controlled in accordance with a second coincidence signal and a read/write control signal,

said first control means (14) comprises:

first comparing means (22, 24) for comparing a first bit portion of an input first access address with the first bit portion of a first start address, and generating a first coincidence signal in accordance with the compared result;

first register means (26) for holding as first control data one of the read permission data and the read inhibition data; and

read access control means (28) for controlling said storage means (16) to be read-accessed in accordance with the first coincidence signal and the first control data; and

said second control means (32) comprising:

second comparing means (48, 50) for comparing a second bit portion of an input second access address with the second bit portion of a second start address, and generating the second coincidence signal in accordance with the compared result to output the second coincidence signal to said buffer means (34);

second register means (42) for holding as second control data one of the write permission data and the write inhibition data; and

write access control means (28) for generating the read/write control signal in accordance with the second control data and a write control signal from said relocation means (2, 4) and outputting the read/write control signal to said buffer means (34).

10. A system according to one of claims 6 through 9, characterized in that said storage means (16) is an m-bit boundary device and said buffer means is an nm-bit boundary device, where n and m are positive integers.

11. A system according to one of claims 6 through 10, characterized in that the relocation program is included in an operating system.

12. A method of preventing contention for an address space, comprising:

inhibiting a program from being read-out from a first memory, a first address area being assigned to the first memory;

determining whether a part of the first address area assigned to the program is used by a device; and

assigning a second address area to the program when it is determined that the part of the first address area is used by the device.

13. A method according to claim 12, characterized in that said assigning step comprises:

permitting the program to be read-out from the first memory;

setting a second memory into a write-permitted state, the second address area being assigned to the second memory; and

copying the program from the first memory to the second memory.

14. A method according to claim 13, characterized in that said assigning step further comprises protecting the second memory from being write-accessed and the first memory from being read-accessed.

15. A method according to claim 12, characterized in that said assigning step comprises:

assigning an address of the second address area to the first memory;

comparing a portion of an input access address with a portion of the assigned address; and

selectively permitting the first memory to be read-accessed in accordance with the compared result.

16. A method according to one of claims 12 thorough 15, characterized in that said inhibiting, determining, and assigning steps are included in a relocation program.

17. A method according to claim 16, characterized in that the relocation program is included in an operating system.

| |
|---|
| SYSTEM PARAMETER AREA |
| |
| APPLICATION PROGRAM |
| |
| VRAM |
| VIDEO BIOS |
| |
| SYSTEM BIOS |

ADDR1 →

} ADDRESS AREA
FOR ROM
IN OPTION BOARD

F I G. 1

F I G. 2

EP 0 350 917 A2

F I G. 3

START

POWER ON — S2

START RELOCATION ROUTINE — S4

SET READ INHIBITION DATA IN REGISTER 26 — S6

READ DATA FROM ADDRESS ADDR1 — S8

INSERTED? — S10

N

Y

SET ADDRESS ADDR2 IN REGISTER 22 — S12

CHANGE SYSTEM PARAMETER — S14

SET READ PERMISSION DATA IN REGISTER 26 — S16

EXECUTE APPLICATION PROGRAM — S18

END

F I G. 4

F I G. 5

F I G. 6

START

POWER ON ~S22

START RELOCATION ROUTINE ~S24

SET TRANSFER PERMISSION
DATA IN REGISTER 36-1 ⌐S26

READ DATA FROM ADDRESS ADDR 1 ⌐S28

SET ADDRESS ADDR 1 IN REGISTER 22,
TRANSFER INHIBITION DATA IN REGISTER 36-1,
READ PERMISSION DATA IN REGISTER 26, AND
WRITE PERMISSION DATA IN REGISTER 42 ⌐S30

INSERTED ? ⌐S32

Y — SET ADDRESS ADDR 2 IN REGISTER 48 ⌐S34

N — SET ADDRESS ADDR 1 IN REGISTER 48 ⌐S35

COPY VIDEO BIOS FROM ROM 16 TO RAM 34 ⌐S36

CHANGE SYSTEM PARAMETER ⌐S37

SET WRITE INHIBITION DATA IN REGISTER
42, READ INHIBITION DATA IN REGISTER 26,
READ PERMISSION DATA IN REGISTER 52,
AND TRANSFER PERMISSION DATA IN
REGISTER 36-1 ⌐S38

EXECUTE APPLICATION PROGRAM ⌐S40

END

F I G. 7

| |
|---|
| SYSTEM PARAMETER AREA |
| |
| APPLICATION PROGRAM |
| |
| VRAM |
| ADDRESS AREA FOR ROM IN OPTION BOARD |
| |
| VIDEO BIOS |
| |
| SYSTEM BIOS |

ADDR1 →
ADDR2 →

F I G. 8